# FASCICULE DE BREVET EUROPEEN

(11) **EP 1 515 566 B1**
(45) Date de publication et mention de la délivrance du brevet: **07.10.2009**
(21) Numéro de dépôt: 04292045.4
(22) Date de dépôt: 12.08.2004
(51) Int. Cl.: H04N 7/26, H04N 5/272, H04N 5/445, G09G 5/39, G09G 5/36

(54) **Dispositif et procédé de traitement de données vidéo et graphiques**
Einrichtung und Verfahren zur Bearbeitung von Video- und Graphic-Daten
Apparatus and Method to process video and grafic data

(30) Priorité: 08.09.2003 FR 0310566
(43) Date de publication de la demande: 16.03.2005
(60) Demande divisionnaire: 09158672.7
(73) Titulaire: STMicroelectronics S.A., 92120 Montrouge (FR)
(72) Inventeur: Chiaruzzi, Emmanuel, 38210 Tullins (FR); Aladenise, Didier, 38130 Echirolles (FR); Vos, Mark, 38000 Grenoble (FR); Walker, Alastair, 38210 Tullins (FR); Gillet, Lydie, 38000 Grenoble (FR); Terrat, Michel, 38120 Saint-Egreve (FR)
(74) Mandataire: Casalonga, Axel

(56) Documents cités:
- US-A- 5 889 949
- TOBIAS R: "The LR33020 GraphX processor: a single chip X-terminal controller" INTELLECTUAL LEVERAGE. SAN FRANCISCO, FEB. 24 - 28, 1992, PROCEEDINGS OF THE COMPUTER SOCIETY INTERNATIONAL CONFERENCE (COMPCON)SPRING, LOS ALAMITOS, IEEE COMP. SOC. PRESS, US, vol. CONF. 37, 24 février 1992 (1992-02-24), pages 358-363, XP010027166 ISBN: 0-8186-2655-0
- MCCORMACK J ET AL: "NEON: A SINGLE-CHIP 3D WORKSTATION GRAPHICS ACCELERATOR" PROCEEDINGS OF THE 1998 EUROGRAPHICS / SIGGRAPH WORKSHOP ON GRAPHICS HARDWARE. LISBON, AUG. 31 - SEPT. 1, 1998, EUROGRAPHICS / SIGGRAPH WORKSHOP ON GRAPHICS HARDWARE, NEW YORK, NY: ACM, US, vol. WORKSHOP 2, 31 août 1998 (1998-08-31), pages 123-132, XP001017000 ISBN: 1-58113-097-X
- KNEIP J ET AL: "APPLYING AND IMPLEMENTING THE MPEG-4 MULTIMEDIA STANDARD" IEEE MICRO, IEEE INC. NEW YORK, US, vol. 19, no. 6, novembre 1999 (1999-11), pages 64-74, XP000875003 ISSN: 0272-1732
- BEREKOVIC M ET AL: "Architecture of an image rendering co processor for MPEG-4 systems" APPLICATION-SPECIFIC SYSTEMS, ARCHITECTURES, AND PROCESSORS, 2000. PROCEEDINGS. IEEE INTERNATIONAL CONFERENCE ON JULY 10-12, 2000, PISCATAWAY, NJ, USA,IEEE, 10 juillet 2000 (2000-07-10), pages 15-24, XP010507733 ISBN: 0-7695-0716-6
- NGUYEN-PHUC Q-L ET AL: "VLSI architecture of a MPEG-4 visual renderer" SIGNAL PROCESSING SYSTEMS, 2001 IEEE WORKSHOP ON 26-28 SEPT. 2001, PISCATAWAY, NJ, USA,IEEE, 26 septembre 2001 (2001-09-26), pages 309-320, XP010562779 ISBN: 0-7803-7145-3

## Description

L'invention concerne le traitement de données vidéo et graphiques, par exemple des données issues d'un disque vidéo numérique (DVD), ou bien des données vidéo et graphiques issues d'une transmission de télévision numérique.

L'invention s'applique ainsi avantageusement aux décodeurs vidéo ou aux décodeurs satellite (« Set Top Box », selon une dénomination anglo-saxonne couramment utilisée).

Actuellement, de tels systèmes de traitement d'images vidéo et graphiques sont focalisés sur une question d'optimisation de coût. Par ailleurs, ils requièrent une haute qualité vidéo, mais également l'utilisation de plans graphiques pour afficher notamment des menus sur les écrans de télévision et ajouter ainsi de l'interactivité à tous les programmes.

Actuellement, le coût d'un tel système de traitement est en partie défini par le choix des mémoires externes. Et, on utilise préférentiellement des mémoires du type SDRAM qui présentent un coût faible. Par contre, de telles mémoires offrent une faible bande passante, ce qui conduit à optimiser le système par rapport à ce critère de bande passante faible.

Afin de remédier à ce problème de bande passante, mais également pour respecter les contraintes de traitement des pixels qui, dans des applications de télévision, doivent être effectuées à une fréquence de 13,5 MHz et parfois plus pour permettre des remises à l'échelle, les systèmes actuels sont conçus de façon à minimiser le nombre de manipulations de pixels.

Dans cette optique, de tels systèmes de traitement de données vidéo et graphiques comportent des unités qui créent les pixels et stockent les images ainsi créées dans la mémoire externe. De telles unités sont par exemple des décodeurs MPEG, JPEG, des microprocesseurs, ou encore des accélérateurs graphiques qui permettent la création d'objets graphiques à l'aide de fonctions simples, telles que le remplissage d'un rectangle, ou encore la copie d'un objet, ou bien le mélange de deux objets.

Un exemple d'accélérateur graphique est évoqué dans l'article de Tobias, intitulé « The LR 33020 Graph X Processor : a single chip X - Terminal Controller » 1992 IEEE, qui décrit un coprocesseur graphique utilisé pour effectuer les opérations graphiques bidimensionnelles classiques spécifiées dans la norme X Windows.

A côté de ces unités créatrices de pixels, le système comporte également des unités, par exemple du type DMA, qui vont extraire les pixels ainsi générés de la mémoire externe, par exemple la mémoire SDRAM, et les envoyer à un compositeur de pixels dont le rôle est de composer tous les plans (« layers », selon une dénomination anglophone couramment utilisée) destinés à former l'image avant de l'envoyer à un dispositif d'affichage, par exemple un écran de télévision.

Et, chaque unité du type DMA, est dédiée à un type de plan particulier de l'image, par exemple un plan vidéo ou un plan graphique, et est optimisée pour extraire ce plan avec un format prédéterminé.

Une telle architecture est efficace en termes de bande passante, puisque la manipulation des pixels est réduite au minimum. En effet, pendant la durée d'une trame ou d'une image, les décodages vidéo ainsi que les plans graphiques sont effectués, tandis qu'ils sont accédés durant l'image ou la trame suivante et composés ensemble. Il en résulte donc que la mémoire externe est utilisée une fois pour stocker tous les plans et une fois pour les lire avant mixage ou composition.

Cependant, l'arrivée de nouvelles mémoires du type par exemple DDR/SDRAM, rend maintenant une telle architecture obsolète et chère.

En effet, son principal inconvénient réside alors dans l'encombrement surfacique. Plus précisément, en fonction du nombre de plans utilisés par l'application, chaque unité du type DMA peut nécessiter des moyens de re-dimensionnement, d'anti-scintillement ou de conversion de couleur. Et, tous ces moyens conduisent à une parallélisation des ressources extrêmement coûteuse en termes de surface.

Par ailleurs, le compositeur de pixels doit être prévu pour combiner tous les plans graphiques avec des plans vidéo. Or, un tel compositeur est composé d'un grand nombre de multiplieurs, ce qui a également un impact négatif sur la surface.

Par ailleurs, puisqu'un matériel est dédié à chaque plan, une fois que la configuration est choisie, le circuit intégré (ASIC) n'est plus flexible et tout changement dans les spécifications se traduit alors par un changement dans les moyens matériels.

En outre, afin d'éviter les manipulations de pixels, toutes les unités du type DMA fonctionnent à la fréquence d'échantillonnage télévision ou à un multiple de cette fréquence d'échantillonnage (13,5 MHz ou 27 MHz). Et, afin d'éviter des non délivrances de pixels à l'écran de télévision, il convient alors de prendre en compte un grand nombre de contraintes temps réel, ce qui conduit à complexifier encore le système.

L'invention vise à apporter une solution à ces problèmes.

L'invention a pour but de réduire la surface d'un système de traitement de données vidéo et graphiques, tout en n'étant pas limitée par le matériel pour le nombre de plans à composer.

L'invention a également pour but de n'offrir aucune limitation quant au nombre de plans vidéo pouvant être affichés.

L'invention a également pour but de n'offrir aucune limitation quant aux facteurs de remise à l'échelle pour les plans graphiques.

L'invention a également pour but de ne plus imposer de contraintes quant à l'emplacement de vignettes graphiques sur l'image. Plus précisément, l'invention a pour but de permettre l'insertion de plusieurs vignettes graphiques sur une même ligne vidéo.

L'invention propose donc un dispositif de traitement de données vidéo et graphiques, comprenant un composant et une mémoire vive principale apte à contenir des données vidéo et graphiques.

Le composant comporte un générateur de synchronisation vidéo apte à délivrer à intervalles réguliers des signaux de synchronisation verticale, une unité de traitement, une unité d'accélération bidimensionnelle apte à générer des objets graphiques destinés à être insérés dans des plans graphiques conformément à une liste d'instructions d'application, à coopérer avec l'unité de traitement et la mémoire principale pour composer en temps réel au cours de certains au moins de ces intervalles des images à afficher comportant au moins un plan vidéo et au moins un plan graphique compte tenu d'instructions de composition , les données vidéo relatives à un plan vidéo de l'image comportant des données de luminance et des données de chrominance moins nombreuses que les données de luminance, et stocker les images dans la mémoire principale, la tâche de composition d'image étant prioritaire par rapport à celle de génération d'objet graphique au sein d'un intervalle, et une interface de sortie pour extraire de la mémoire les données d'images ainsi composées en vue de leur délivrance à un moyen d'affichage d'images**.**

Ainsi, l'invention prévoit d'utiliser une unité d'accélération bidimensionnelle, c'est-à-dire un accélérateur graphique bidimensionnel qui était en général jusqu'à maintenant utilisé pour créer des objets graphiques, pour composer en temps réel des images comportant au moins un plan graphique et au moins un plan vidéo.

Selon l'invention, comme indiqué ci-avant, l'unité d'accélération est utilisée pour la composition de l'image.

Ceci étant, selon l'invention, l'unité d'accélération est également apte à générer des objets graphiques destinés à être insérés dans les plans graphiques.

En d'autres termes, selon l'invention, l'unité d'accélération est alors utilisée pour deux fonctions, à savoir d'une part la génération d'objets graphiques qui est sa fonction habituelle, et d'autre part la composition d'image.

Selon un mode de réalisation de l'invention, la mémoire vive principale est une mémoire externe au composant.

Selon un mode de réalisation de l'invention, le composant comporte un générateur de synchronisation vidéo apte à délivrer à intervalles réguliers des signaux de synchronisation verticale. Et, pendant un premier intervalle, l'unité de traitement est apte à effectuer une analyse de scène de l'image à afficher et à générer une liste d'instructions de composition de ladite image.

Pendant un deuxième intervalle, consécutif au premier, l'unité d'accélération compose l'image à afficher compte tenu desdites instructions de composition et la stocke dans ladite mémoire principale.

Pendant un troisième intervalle, consécutif au deuxième, l'interface de sortie extrait les données d'image de ladite image à afficher.

Le composant peut comporter avantageusement une interface d'entrée pour recevoir des données vidéo codées, ainsi qu'une unité de décodage vidéo coopérant avec l'unité de traitement et ladite mémoire principale. Dans ce cas, l'unité de décodage vidéo effectue avantageusement le décodage des données vidéo et les stocke dans la mémoire principale pendant le premier intervalle.

Bien que l'unité de traitement puisse générer des instructions de composition pour la totalité de l'image, l'invention est particulièrement avantageuse en ce sens que l'unité de traitement peut générer des instructions de composition pour certaines parties seulement de l'image, en particulier lorsque d'autres parties de l'image ne sont pas modifiées par rapport aux images précédentes.

Selon un mode de réalisation de l'invention, dans lequel l'image à composer comporte plus de deux plans, l'unité d'accélération est apte à composer l'image en plusieurs compositions élémentaires successives, chaque composition élémentaire mettant en oeuvre deux plans intermédiaires, un plan intermédiaire étant un plan de l'image ou un plan résultant d'au moins une composition élémentaire précédente.

En d'autres termes, selon l'invention, l'unité d'accélération bidimensionnelle compose deux à deux les différents plans de l'image, par exemple dans une zone de mémoire-tampon (« frame buffer », selon une dénomination anglo-saxonne) de la mémoire vive principale. Et, une fois composée, cette zone de mémoire-tampon est accédée par l'interface de sortie qui se compose alors d'une seule unité, du type DMA par exemple, afin d'être envoyée à l'unité d'affichage.

Selon un mode de réalisation de l'invention, l'unité d'accélération comporte :
- trois entrées,
- trois voies internes de traitement respectivement connectées sur les trois entrées,
- une unité commandable de composition connectée à la sortie desdites trois voies internes de traitement,
- une quatrième voie interne de traitement connectée à la sortie de l'unité de composition, et
- une sortie connectée à la sortie de cette quatrième voie.

Une première et une deuxième voies internes de traitement parmi lesdites trois voies internes de traitement, sont avantageusement équipées de moyens de filtrage horizontal et vertical, de façon à pouvoir transformer la taille d'une image, tandis que la troisième voie interne est exempte de moyens de filtrage horizontal et vertical.

Par ailleurs, les données vidéo relatives à un plan vidéo de l'image et comportant des données de luminance et des données de chrominance moins nombreuses que les données de luminance, sont exclusivement traitées par lesdites première et deuxième voies internes de traitement.

Par ailleurs, l'une desdites première et deuxième voies internes est de préférence exclusivement dédiée au traitement de données de luminance.

Les moyens de filtrage de chacune des première et deuxième voies internes sont avantageusement commandables indépendamment.

Afin d'optimiser encore la bande passante, il est avantageusement prévu d'utiliser une mémoire vive auxiliaire, interne au composant, qui sera utilisée en tant que zone de travail pour stocker temporairement des résultats sans utiliser la zone de mémoire-tampon d'image de la mémoire externe.

Ainsi, grâce à cette mémoire interne, la consommation de bande passante sur la mémoire vive principale externe est fortement réduite.

En d'autres termes, selon un mode de réalisation de l'invention, ledit composant comporte une mémoire vive interne apte à coopérer avec l'unité d'accélération, de façon à stocker temporairement des données intermédiaires lors de la composition d'une image.

Et, afin de profiter pleinement de cette mémoire vive interne, il est particulièrement avantageux de découper les plans de l'image en « petits carreaux » qui seront traités l'un après l'autre, la taille de ces carreaux étant reliée à la taille de la mémoire vive interne.

Plus précisément, selon un mode de réalisation de l'invention, l'unité de traitement est apte, en présence d'une zone d'une image à composer comportant plus de deux plans, à subdiviser cette zone en sous-zones dont la taille à la sortie de l'unité d'accélération bidimensionnelle est au plus égale à la taille-mémoire de ladite mémoire interne. En d'autres termes cette taille est telle qu'une fois ces deux sous-zones composées, la taille résultante est au plus égale à la taille-mémoire de ladite mémoire interne.

L'unité d'accélération est alors apte à effectuer la composition de ladite zone en composant successivement les différentes sous-zones, la composition d'une sous-zone s'effectuant en plusieurs compositions élémentaires successives, chaque composition élémentaire mettant en oeuvre deux plans intermédiaires, un plan intermédiaire étant un plan de ladite sous-zone ou un plan résultant d'au moins une composition élémentaire précédente de ladite sous-zone.

Par ailleurs, le résultat de la dernière composition élémentaire de la sous-zone est stocké dans ladite mémoire principale, alors que le résultat de chaque composition élémentaire précédente est temporairement stocké dans ladite mémoire interne.

Selon un mode de réalisation de l'invention, l'unité d'accélération graphique comporte des moyens de contrôle aptes à déclencher la tâche de composition d'image à l'occurrence d'un signal de synchronisation verticale, puis à déclencher une tâche de génération d'objets graphiques ou à autoriser la reprise d'une tâche de génération d'objets graphiques interrompue lors de ladite occurrence du signal de synchronisation verticale.

Le dispositif selon l'invention est avantageusement réalisé sous la forme d'un circuit intégré.

L'invention a également pour objet un décodeur vidéo incorporant un dispositif de traitement de données vidéo et graphiques tel que défini ci-avant.

L'invention propose également un procédé de traitement de données vidéo et graphiques, dans lequel on génère au sein d'une unité d'accélération des objets graphiques destinés à être insérés dans des plans graphiques conformément à une liste d'instructions d'application, on délivre à intervalles réguliers des signaux de synchronisation verticale, et au cours de certains au moins de ces intervalles, on compose en temps réel au sein de ladite unité d'accélération bidimensionnelle des images à afficher comportant au moins un plan vidéo et au moins un plan graphique compte tenu d'instructions de composition, les données vidéo relatives à un plan vidéo de l'image comportant des données de luminance et des données de chrominance moins nombreuses que les données de luminance, la tâche de composition d'image étant prioritaire par rapport à celle de génération d'objet graphique au sein d'un intervalle, et on stocke les images dans une mémoire principale puis on extrait de la mémoire principale les données d'images ainsi composées en vue d'un affichage des images correspondantes.

Ladite mémoire principale est par exemple située à l'extérieur d'un composant comportant ladite unité d'accélération.

Selon un mode de mise en oeuvre de l'invention, on délivre à intervalles réguliers des signaux de synchronisation verticale. Pendant un premier intervalle, on effectue une analyse de scène de l'image à afficher et on génère une liste d'instructions de composition de ladite image. Pendant un deuxième intervalle, consécutif au premier, on compose l'image à afficher compte tenu desdites instructions de composition et on la stocke dans ladite mémoire principale, et pendant un troisième intervalle, consécutif au deuxième, on extrait les données d'image de ladite image à afficher.

L'analyse de scène comporte par exemple une segmentation de cette scène en plusieurs zones ou régions homogènes en terme de composition (nombre de plans, ordre des plans, paramètres de re-dimensionnement ...). Et on génère alors pour chaque zone une liste de composition de ladite zone.

Selon un mode de mise en oeuvre de l'invention, on reçoit des données vidéo codées, on décode ces données vidéo et on les stocke dans la mémoire principale pendant le premier intervalle.

Selon un mode de mise en oeuvre de l'invention, on peut générer des instructions de composition pour certaines zones seulement de l'image.

Lorsque certaines zones de l'image à composer comportent plus de deux plans, on peut composer ces zones de l'image en plusieurs compositions élémentaires successives, chaque composition élémentaire mettant en oeuvre deux plans intermédiaires, un plan intermédiaire étant un plan de l'image ou un plan résultant d'au moins une composition élémentaire précédente.

Selon un mode de mise en oeuvre de l'invention, on stocke temporairement des données intermédiaires lors de la composition d'une image, dans une mémoire interne au composant comportant ladite unité d'accélération.

On déclenche par exemple la tâche de composition d'image à l'occurrence d'un signal de synchronisation verticale, puis à l'issue de cette tâche de composition, on déclenche une tâche de génération d'objets graphiques ou on autorise la reprise d'une tâche de génération d'objets graphiques interrompue lors de ladite occurrence du signal de synchronisation verticale.

D'autres avantages et caractéristiques de l'invention apparaîtront à l'examen de la description détaillée de modes de réalisation et de mise en oeuvre, nullement limitatifs, et des dessins annexés, sur lesquels :
- la figure 1 illustre schématiquement un premier mode de réalisation d'un dispositif de traitement selon l'invention ;
- la figure 2 illustre schématiquement un autre mode de réalisation d'un dispositif selon l'invention ;
- la figure 3 illustre schématiquement des traitements d'image selon un mode de mise en oeuvre de l'invention ;
- la figure 4 illustre schématiquement un mode de réalisation d'une unité d'accélération bidimensionnelle selon l'invention ;
- les figures 5 et 6 illustrent schématiquement un exemple de composition d'image selon l'invention ;
- la figure 7 illustre schématiquement un autre exemple de composition d'image selon l'invention,
- la figure 8 illustre schématiquement un autre mode de réalisation d'un dispositif selon l'invention ;
- les figures 9 et 10 illustrent schématiquement un autre exemple de composition d'image selon l' invention ;
- la figure 11 illustre schématiquement un autre mode de réalisation d'une unité d'accélération selon l'invention ; et
- la figure 12 illustre schématiquement un fonctionnement d'une unité d'accélération tel que représenté sur la figure 10.

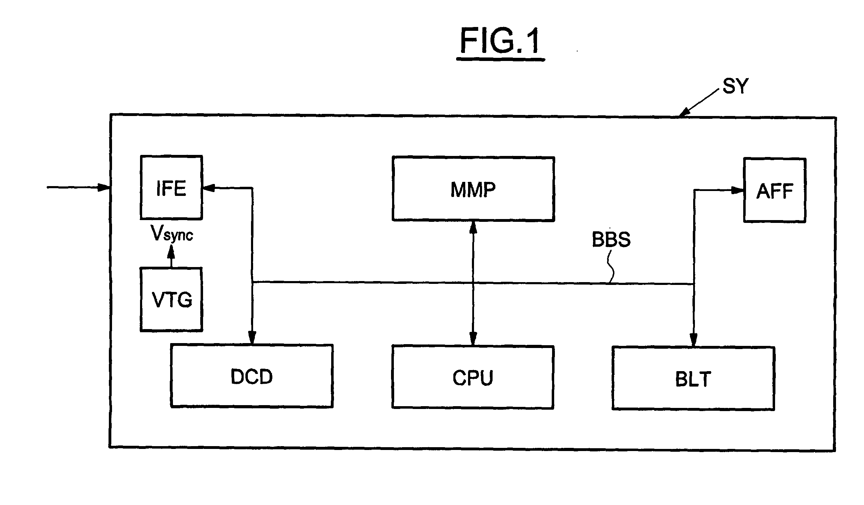

Sur la figure 1, la référence SY désigne d'une façon générale un dispositif de traitement d'image numérique incorporant par exemple un décodeur satellite et/ou un téléviseur.

Dans ce dispositif SY, des moyens d'entrée IFE reçoivent, par exemple, d'une antenne satellite ou d'un disque numérique (non représenté ici à des fins de simplification) un flot de données comprimées selon, par exemple, les normes MPEG.

Un dispositif DCD de décodage d'image, par exemple un décodeur MPEG, décode les images codées à partir de ces données comprimées, aux fins de leur affichage sur un écran d'affichage AFF.

Le dispositif SY comprend par ailleurs une unité de traitement CPU, ou microprocesseur, pouvant par exemple gérer le décodage des différents canaux satellite ainsi qu'un générateur BLT d'informations graphiques destinées à être incrustées sur l'écran en superposition des images vidéo, par exemple des menus interactifs obtenus par l'actionnement d'une télécommande de téléviseur. Ce générateur BLT est une unité d'accélération bidimensionnelle qui, comme on va le voir plus en détail ci-après, va permettre la composition des images à afficher.

Le dispositif SY comporte également une mémoire dynamique MMP, par exemple une mémoire du type DDR/SDRAM, qui est partagée entre ces différents éléments.

L'ensemble des éléments de la figure 1 dialogue via un bus bidirectionnel BBS.

Enfin, le dispositif SY comporte un générateur de synchronisation vidéo VTG apte à délivrer à intervalles réguliers des signaux de synchronisation verticale Vsync. Selon le mode d'affichage utilisé sur l'écran, ces signaux de synchronisation verticale peuvent séparer des trames d'une image ou bien des images.

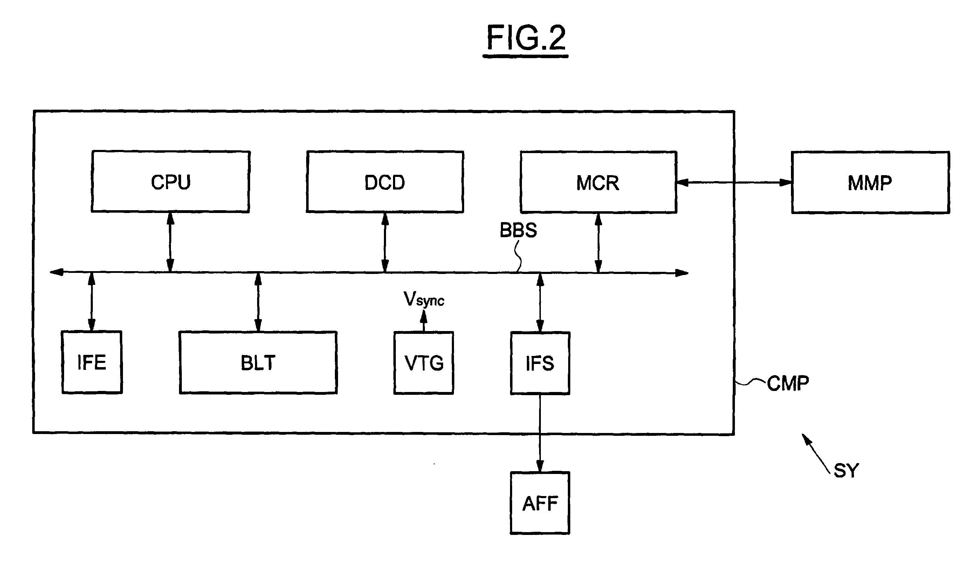

Alors que la mémoire MMP pourrait faire partie du circuit intégré formant le composant incorporant le décodeur DCD, le processeur CPU, l'unité d'accélération BLT et l'interface IFE, il est également possible, comme illustré sur la figure 2, que la mémoire principale MMP soit une mémoire externe au composant CMP.

Dans ce cas, la mémoire MMP dialogue avec les autres éléments du composant CMP par l'intermédiaire d'un contrôleur de mémoire MCR. Par ailleurs, il est prévu une interface de sortie IFS, du type DMA, reliée au bus BBS ainsi qu'au moyen d'affichage AFF.

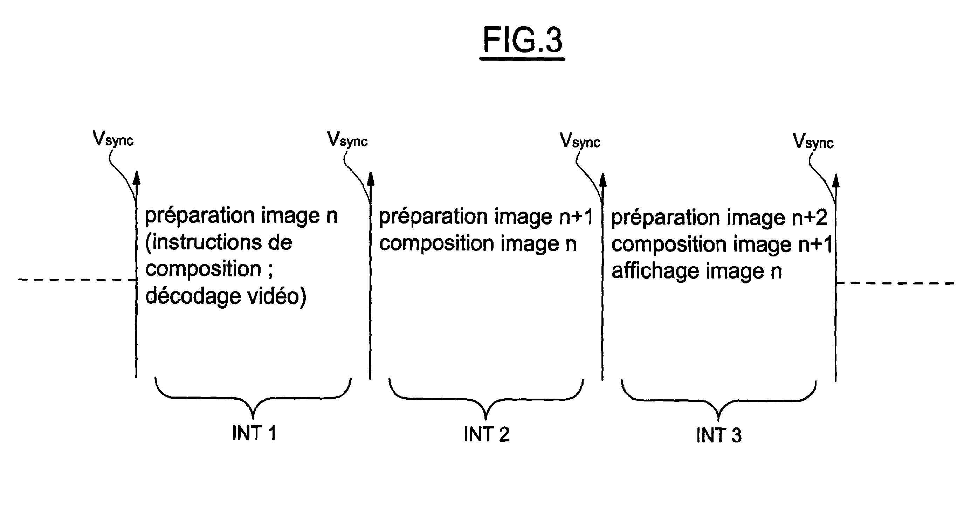

Comme illustré sur la figure 3, le générateur de synchronisation vidéo délivre à intervalles réguliers des signaux de synchronisation verticale Vsync.

Par ailleurs, généralement, une image comporte plusieurs plans (« layers », selon une dénomination anglo-saxonne couramment utilisée) dont au moins un plan vidéo et un plan graphique.

Et, comme illustré sur la figure 3, pendant un premier intervalle INT1, l'unité de traitement CPU est apte à effectuer une analyse de scène de l'image à afficher et à générer une liste d'instructions de composition de cette image. Par ailleurs, pendant ce premier intervalle INT1, l'unité de décodage vidéo DCD effectue le décodage des données vidéo et les stocke dans la mémoire principale MMP.

Puis, pendant un deuxième intervalle INT2, consécutif au premier intervalle INT1, l'unité d'accélération BLT compose l'image à afficher, compte tenu desdites instructions de composition et la stocke dans la mémoire principale.

Parallèlement, pendant cet intervalle INT2, l'unité de traitement CPU prépare l'image suivante n+1.

Puis, pendant un troisième intervalle INT3, consécutif au deuxième INT2, l'interface de sortie IFS extrait de la mémoire principale MMP les données d'image de l'image n, en vue de son affichage.

Parallèlement, pendant l'intervalle INT3, l'unité de traitement CPU prépare l'image suivante n+2, tandis que l'unité d'accélération BLT compose l'image n+1.

On reviendra plus en détail ci-après sur cette composition d'image.

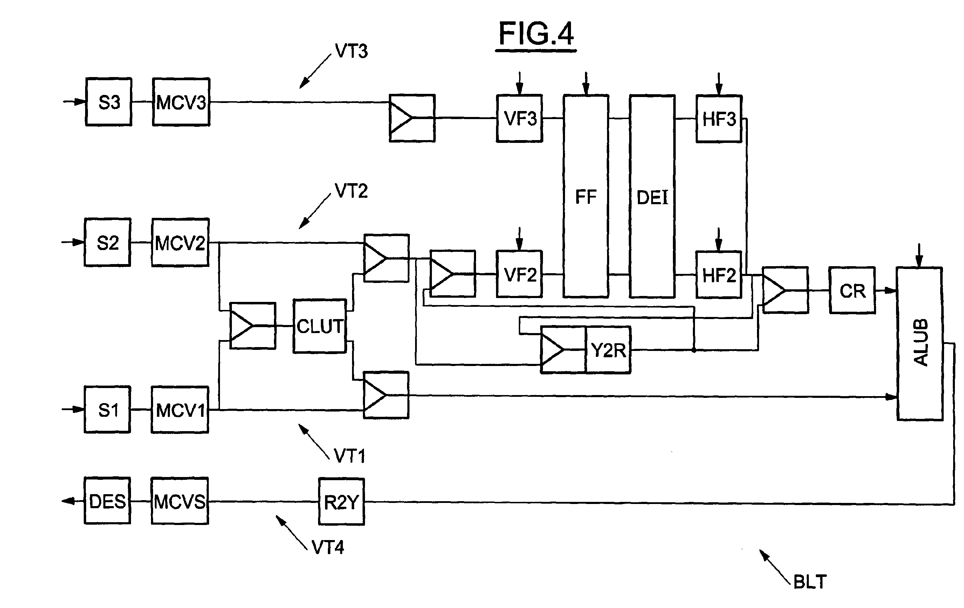

A cet égard, on va maintenant décrire plus en détail, en se référant plus particulièrement à la figure 4, une architecture interne d'une unité d'accélération d'image BLT permettant la composition d'image.

Par rapport à une structure classique d'accélérateur, qui ne permet que la génération d'objets graphiques, l'unité d'accélération BLT selon l'invention comporte notamment une voie supplémentaire de traitement, en l'espèce la voie VT3.

En d'autres termes, l'unité BLT comporte trois entrées, S1, S2, S3 (trois mémoires FIFO), connectées sur les trois voies de traitement VT1, VT2 et VT3, qui aboutissent à une unité arithmétique et logique de composition ALUB, formée classiquement de multiplieurs.

Par ailleurs, l'unité BLT comporte une voie de traitement classique de sortie VT4 connectée entre la sortie de l'unité de composition ALUB et une mémoire FIFO de sortie DES.

En tête de chacune des voies de traitement VT1-VT3, sont disposés des moyens de conversion d'entrée MCV1-MCV3. Chacun de ces moyens est destiné à recevoir par exemple des mots de 128 bits et délivrer des pixels sur 32 bits selon par exemple un format αRGB de 4x8 bits. α désigne ici les 8 bits de transparence du pixel.

De tels moyens sont classiques et connus en eux-mêmes, et comportent notamment des moyens de gestion de lecture dans la mémoire FIFO ainsi qu'un séquenceur et des moyens d'encodage de couleur.

Sur la voie de sortie VT4, des moyens MCVS, également de structure classique et connue en soi, effectuent des traitements inverses de ceux effectués dans les moyens MCV1-MCV3.

Lorsque les moyens MCV1 ou MCV2 délivrent des mots correspondant à une couleur indexée, il est alors prévu d'utiliser une table de correspondance de couleur CLUT ( « Look Up Table ») de façon à obtenir le format en couleur vraie.

De même, des moyens de conversion de couleur, référencés Y2R, et capables de transformer du format YCbCr en format αRGB, sont prévus en parallèle sur l'une des voies de traitement, en l'espèce la voie VT2. De même, des moyens de conversion inverses R2Y sont prévus sur la voie de sortie VT4.

Par ailleurs, les voies VT2 et VT3 sont équipées de moyens de filtrage horizontal et vertical, respectivement référencés HF2, HF3 et VF2, VF3, de façon à pouvoir transformer la taille d'une image, tandis que la voie de traitement VT1 est exempte de moyens de filtrage horizontal et vertical.

Entre ces moyens de filtrage vertical et horizontal, sont disposés un filtre anti-scintillement FF, ainsi qu'un moyen de désentrelacement DEI. Les moyens de filtrage de chacune des voies VT2 et VT3 sont commandables indépendamment, ce qui permet de piloter séparément le facteur de remise à l'échelle (« resize-factor » selon une dénomination anglo-saxonne couramment utilisée) pour les données de luminance Y et de chrominance CbCr, par exemple.

Les moyens de filtrage horizontal et vertical ainsi que le filtre anti-scintillement et le désentrelaceur, sont des moyens classiques et connus en soi. Ceci étant, on peut par exemple utiliser des moyens de filtrage et un filtre anti-scintillement, tels que ceux décrits par exemple dans les demandes de brevets français n°s 2 801 463 et/ou 2 798 033.

Des données vidéo relatives à un plan vidéo de l'image à composer, et comportant des données de luminance Y et des données de chrominance CbCr moins nombreuses que les données de luminance, sont exclusivement traitées par les voies de traitement VT2 et VT3.

Et, à titre d'exemple, la voie de traitement VT3 sera exclusivement dédiée au traitement de données de luminance.

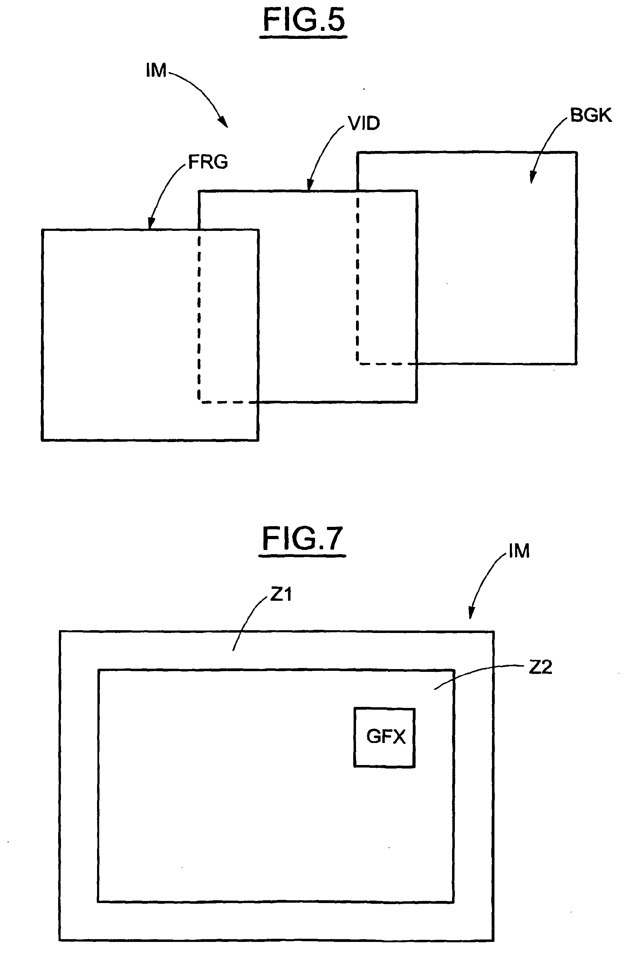

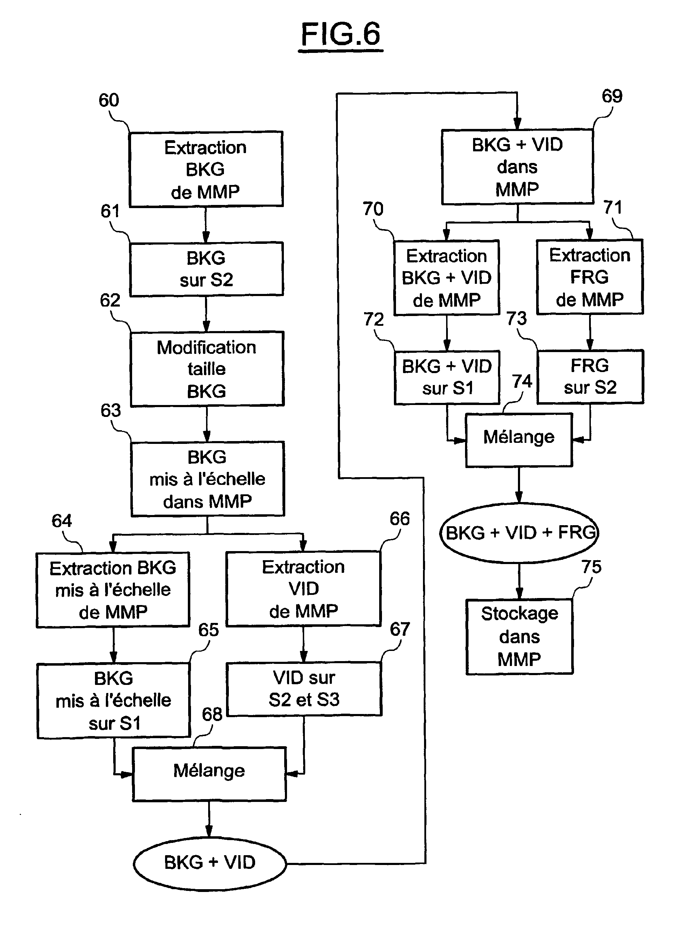

On va maintenant décrire, en se référant plus particulièrement aux figures 5 et 6, un exemple de composition d'image.

Sur cet exemple, on suppose que l'image IM se compose de trois plans, à savoir, un plan graphique de fond BKG, un plan graphique de premier plan FRG et un plan vidéo VID.

Les instructions de composition ainsi que le décodage de données vidéo ayant déjà été effectués, le plan de fond BKG est extrait de la mémoire principale MMP (étape 60) et est délivré sur l'entrée S2 (étape 61), de façon à pouvoir être mis à l'échelle après passage dans les filtres verticaux et horizontaux (étape 62). En effet, généralement, compte tenu que les plans graphiques ont des formats spécifiques, une mise à l'échelle est généralement nécessaire.

Puis, les données graphiques représentatives du plan BKG mis à l'échelle sont stockées dans la mémoire principale MMP, et plus exactement dans une zone-mémoire spécifique « frame buffer »de la mémoire MMP (étape 63).

Puis, les données d'image correspondant au plan BKG mis à l'échelle, sont extraites de cette zone-mémoire spécifique (étape 64), et les données vidéo correspondant au plan vidéo VID sont également extraits de la mémoire MMP (étape 66).

Puis les données de luminance du plan vidéo sont délivrées à l'entrée S3, tandis que les données de chrominance du plan vidéo sont délivrées sur l'entrée S2 (étape 67).

Après remise à l'échelle pour tenir compte du nombre moins important de données de chrominance par rapport aux données de luminance, les données vidéo sont mélangées (étape 68) dans l'unité de composition ALUB avec les données graphiques issues de la voie de traitement VT1 et correspondant au plan graphique BKG mis à l'échelle.

A l'issu de cette étape de mélange 68, on a réalisé une composition élémentaire de deux plans de l'image, et les données correspondantes BKG+VID sont délivrées à la sortie DES pour être stockées dans la zone-mémoire spécifique de la mémoire principale MMP (étape 69).

Puis, ces données BKG+VID sont extraites de la zone-mémoire spécifique de la mémoire MMP (étape 70) pour être délivrées sur l'entrée S1 de l'unité d'accélération BLT (étape 72) afin d'être injectées dans l'unité de composition ALUB sans subir de traitement de filtrage.

Parallèlement, les données représentatives du plan graphique de premier plan FRG sont extraites de la mémoire MMP (étape 71) pour être délivrées sur l'entrée S2 (étape 73) afin de subir un traitement de mise à l'échelle (étape 73) avant le mélange (étape 74) dans l'unité de composition ALUB avec les données BKG+VID.

On réalise ainsi une autre composition élémentaire mettant en oeuvre le plan FRG et le plan BKG+VID résultant de la composition élémentaire précédente.

Les données correspondantes sont délivrées en sortie DES de l'unité d'accélération BLT pour être stockées dans la zone-mémoire spécifique de la mémoire MMP (étape 75).

Lorsque l'image à composer comporte des plans dont certaines parties ne sont pas modifiées par rapport aux images précédentes, l'unité de traitement peut alors générer des instructions de composition pour certaines parties seulement d'image.

Ainsi, si l'on suppose par exemple que l'image IM de la figure 7 comporte un plan graphique de fond fixe, c'est-à-dire non modifié d'une image à l'autre, et que le plan vidéo n'occupe qu'une zone Z2 de l'image IM, l'unité de traitement CPU ne délivrera alors des instructions de composition que pour la zone Z2 de l'image et non pour la zone Z1 fixe, de façon à composer le plan vidéo avec la zone correspondante du plan graphique de fond et avec par exemple un objet GFX situé dans le plan FRG.

L'invention présente donc l'avantage de ne pas nécessiter de mise à jour des parties non modifiées de la zone-mémoire spécifique d'image jusqu'à un éventuel changement dans la scène.

Par ailleurs, l'invention permet de traiter efficacement les opacités de l'image en évitant ainsi d'accéder à des pixels cachés.

Ceci permet ainsi de limiter la consommation de bande passante au niveau de la mémoire principale.

Il est également possible, avec l'invention, de composer des images possédant des vignettes (« view port », selon une dénomination anglosaxonne couramment utilisée) situées sur une même ligne de l'image.

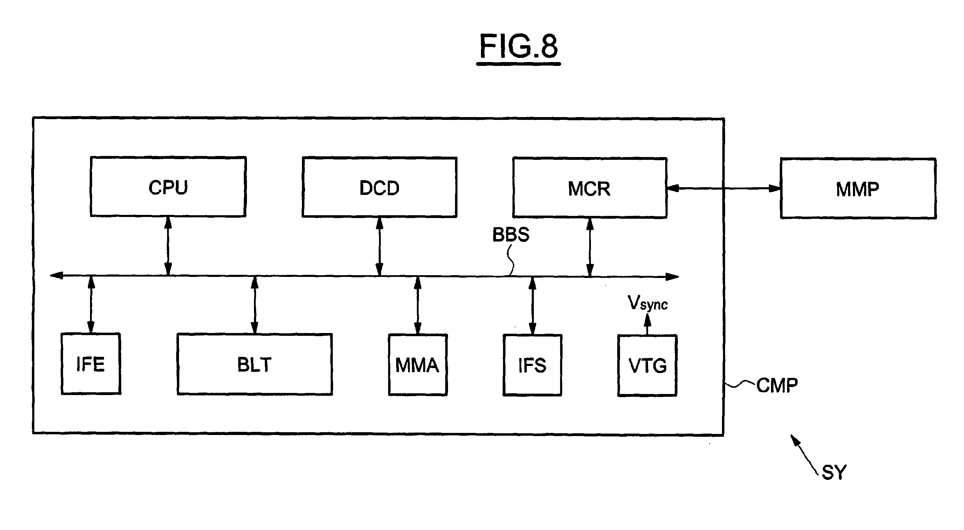

Le mode de réalisation illustré sur la figure 8 permet de réduire encore davantage la consommation de bande passante au niveau de la mémoire principale MMP.

Par rapport au mode de réalisation qui vient d'être décrit, celui illustré sur la figure 8 prévoit que le composant CMP comporte, en outre, une mémoire vive interne MMA, ou mémoire auxiliaire. Cette mémoire est par exemple une mémoire statique du type SRAM.

Cette mémoire vive interne MMA est apte à coopérer avec l'unité d'accélération BLT, de façon à stocker temporairement des données intermédiaires lors de la composition d'une image.

Plus particulièrement, au lieu de composer en une fois le plan complet d'une image, les plans vont être divisés en sous-zones ou carreaux, dont la taille va dépendre de la taille-mémoire de la mémoire MMA ainsi que du format de pixel utilisé.

Et, tous ces carreaux, de petite taille, seront traités les uns après les autres.

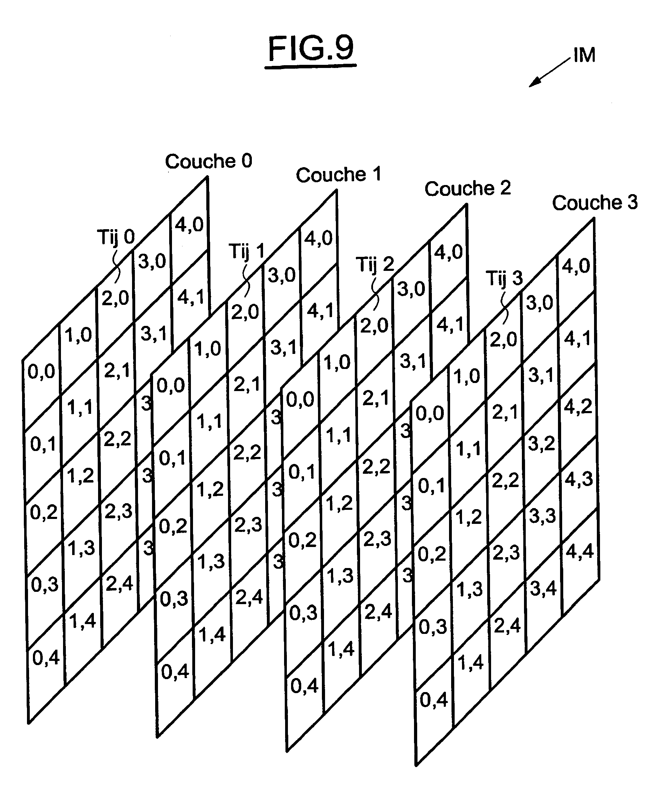

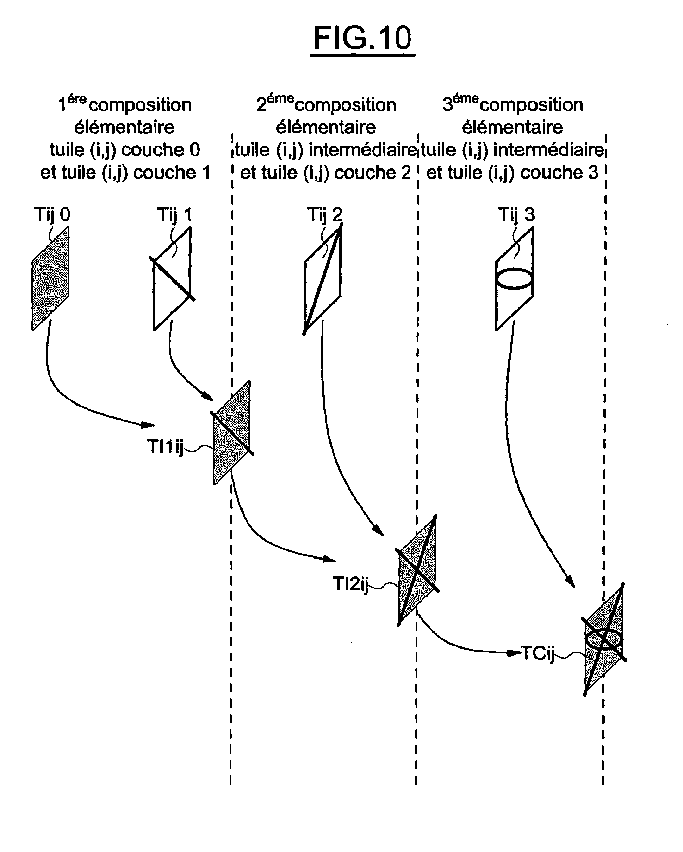

Ainsi, si l'on se réfère à la figure 9, sur laquelle l'image IM est supposée être composée de quatre plans ou couches, chaque couche est décomposée en carreaux Tij. Ainsi, comme illustré également sur la figure 10, la première composition élémentaire va concerner chaque carreau Tij0 de la couche 0 et le carreau homologue Tij1 de la couche 1.

Ainsi, pour chaque carreau ij, le carreau Tij0 sera extrait de la mémoire principale MMP et délivré à l'entrée S1 de l'unité d'accélération BLT, tandis que le carreau Tij1 sera extrait de la mémoire MMP et délivré sur l'entrée S2 de l'unité d'accélération BLT. La sortie DES de cette unité d'accélération BLT va délivrer alors un premier carreau intermédiaire TI1ij qui va être stocké dans la mémoire auxiliaire MMA.

Puis, le carreau intermédiaire TI1ij sera extrait de la mémoire MMA et délivré à l'entrée S1 de l'unité d'accélération BLT, de façon à être composé, lors d'une deuxième composition élémentaire, avec le carreau Tij2, extrait de la mémoire MMP et présent à l'entrée S2 de l'unité d'accélération BLT, de façon à former un deuxième carreau intermédiaire TI2ij.

Ce deuxième carreau intermédiaire TI2ij est à son tour stocké dans la mémoire MMA.

Puis, l'opération se répète lors de la troisième et dernière composition élémentaire (puisqu'il n'y a ici que quatre couches).

Plus précisément, le deuxième carreau intermédiaire TI2ij est extrait de la mémoire MMA, délivré à l'entrée S1 de l'unité d'accélération BLT pour être mélangé avec le carreau Tij3 extrait de la mémoire MMP et délivré à l'entrée S2 de l'unité BLT.

Le résultat de cette troisième composition élémentaire est un carreau totalement composé TCij, qui va être cette fois-ci stocké dans la zone-mémoire spécifique de la mémoire principale MMP.

Cette mémoire auxiliaire MMA permet ainsi d'éviter à l'unité d'accélération de consommer de la bande passante sur la mémoire principale MMP, pour stocker des résultats intermédiaires.

Le temps d'exécution est ainsi réduit, ce qui facilite le contrôle temps réel du traitement.

Alors que les objets graphiques peuvent être parfois générés dans l'unité de traitement CPU elle-même, ou bien provenir directement d'une source externe, il a été particulièrement avantageux d'utiliser l'unité d'accélération BLT pour générer à la fois ces objets graphiques et composer les images.

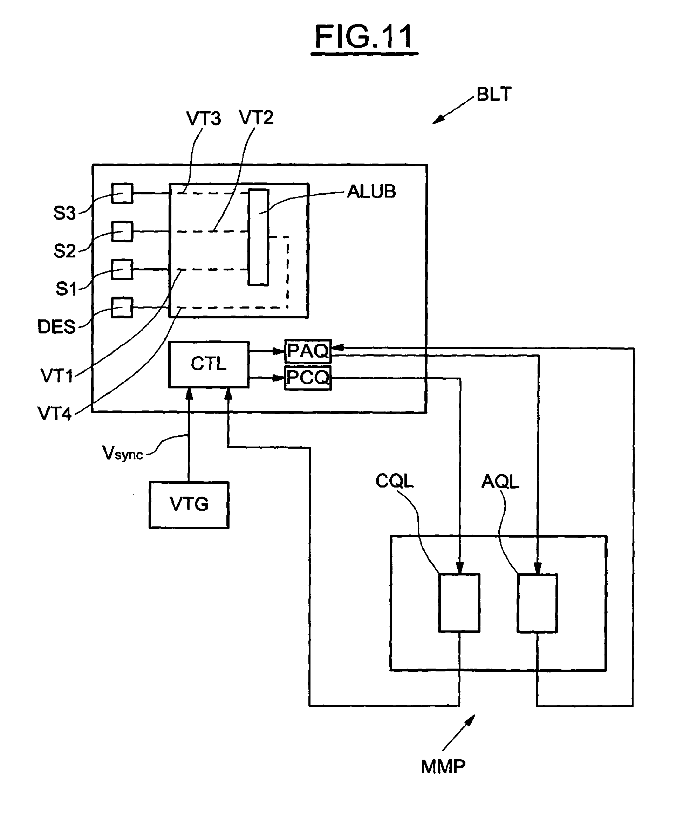

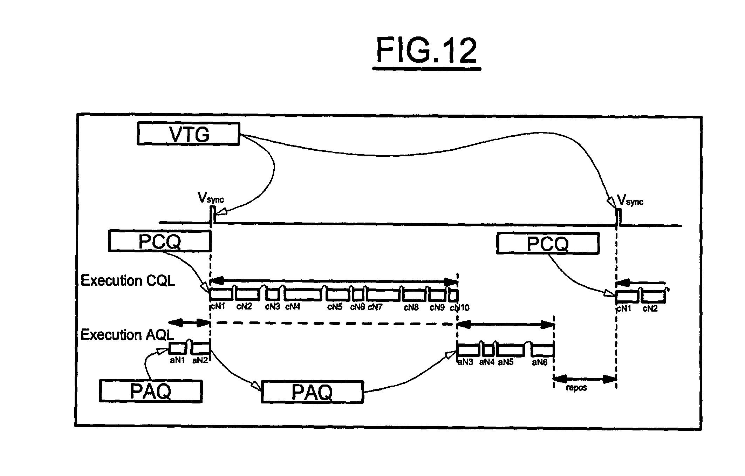

C'est le but du mode de réalisation illustré plus particulièrement sur les figures 11 et 12.

Comme indiqué précédemment, l'unité de composition BLT compose des images, compte tenu d'instructions de composition contenues dans la mémoire MMP et formant une liste d'instructions de composition CQL (figure 11).

Par ailleurs, la génération d'objets graphiques par l'unité d'accélération s'effectue également, conformément à une liste d'instructions d'application AQL également stockées dans la mémoire principale MMP.

Et, de façon à pouvoir assurer à la fois la composition d'une image et la génération d'objets graphiques, l'invention prévoit qu'au sein d'un intervalle séparé par deux occurrences du signal Vsync, la tâche de composition d'image est prioritaire par rapport à celle de génération d'objets graphiques.

A cet égard, il est prévu que l'unité d'accélération graphique comporte des moyens de contrôle CTL, aptes à déclencher la tâche de composition d'image à l'occurrence d'un signal de synchronisation verticale Vsync, puis à déclencher une tâche de génération d'objets graphiques à l'issu de la tâche de composition d'image ou à autoriser la reprise d'une tâche de génération d'objets graphiques qui a été interrompue lors de ladite occurrence du signal de synchronisation verticale.

Ceci va être mieux compris à l'examen de la figure 12.

A l'occurrence d'un signal Vsync délivré par le générateur VTG et reçu par les moyens de contrôle CTL, ceux-ci activent alors un pointeur PCQ qui pointe vers la première adresse de la liste d'instructions de composition CQL.

Les instructions de composition cN₁-cN₁₀ sont ensuite successivement exécutées, puis, lorsque les moyens de contrôle détectent que la dernière instruction cN₁₀ a été exécutée, ils activent un pointeur d'adresse PAQ qui désigne l'instruction d'application à exécuter.

Dans l'exemple illustré sur la figure 12, la liste AQL avait débuté à l'intervalle précédent par l'instruction aN₁. Puis, l'instruction aN₂ avait été exécutée.

A l'issu de l'exécution de cette instruction aN₂, est intervenue l'occurrence du signal Vsync qui a déclenché la tâche de composition d'image cN₁-cN₁₀. Parallèlement à ce déclenchement, l'adresse suivante dans la liste d'instructions d'application actuelle, en l'espèce l'adresse aN₃, avait été mise à jour dans le pointeur PAQ.

Aussi, après l'exécution de l'instruction de composition cN₁₀, la génération de l'objet graphique se poursuit à partir de l'instruction aN₃ jusqu'à l'instruction aN₆. Puis, dans l'exemple illustré ici, il existe un temps de repos (« idle ») avant l'occurrence du signal Vsync suivant.

## Revendications

1. Dispositif de traitement de données vidéo et graphiques, comprenant un composant (CMP) et une mémoire vive principale (MMP) apte à contenir des données vidéo et graphiques, le composant comportant un générateur de synchronisation vidéo (VTG) apte à délivrer à intervalles réguliers des signaux de synchronisation verticale (Vsync), une unité de traitement (CPU), une unité d'accélération bidimensionnelle (BLT) apte à générer des objets graphiques destinés à être insérés dans des plans graphiques conformément à une liste d'instructions d'application (AQL), à coopérer avec l'unité de traitement et la mémoire principale pour composer en temps réel au cours de certains au moins de ces intervalles des images à afficher comportant au moins un plan vidéo et au moins un plan graphique compte tenu d'instructions de composition (CQL) , les données vidéo relatives à un plan vidéo de l'image comportant des données de luminance et des données de chrominance moins nombreuses que les données de luminance, et stocker les images dans la mémoire principale, la tâche de composition d'image étant prioritaire par rapport à celle de génération d'objet graphique au sein d'un intervalle, et une interface de sortie (IFS) pour extraire de la mémoire les données d'images ainsi composées en vue de leur délivrance à un moyen d'affichage d'images (AFF).

2. Dispositif selon la revendication 1, **caractérisé par le fait que** ladite mémoire vive principale (MMP) est une mémoire externe au composant.

3. Dispositif selon la revendication 1 ou 2, **caractérisé par le fait que** pendant un premier intervalle (INT1), l'unité de traitement est apte à effectuer une analyse de scène de l'image à afficher et à générer une liste d'instructions de composition de ladite image, **par le fait que** pendant un deuxième intervalle (INT2), consécutif au premier, l'unité d'accélération compose l'image à afficher compte tenu desdites instructions de composition et la stocke dans ladite mémoire principale, et **par le fait que** pendant un troisième intervalle (INT3), consécutif au deuxième, l'interface de sortie extrait les données d'image de ladite image à afficher.

4. Dispositif selon la revendication 3, **caractérisé par le fait que** le composant (CMP) comporte une interface (IFE) pour recevoir des données vidéo codées, et une unité de décodage vidéo (DCD) coopérant avec l'unité de traitement (CPU) et ladite mémoire principale (MMP), et **par le fait que** l'unité de décodage vidéo effectue le décodage des données vidéo (DCD) et les stocke dans la mémoire principale pendant le premier intervalle (INT1).

5. Dispositif selon la revendication 3 ou 4, **caractérisé par le fait que** l'unité de traitement (CPU) est apte à générer des instructions de composition pour certaines zones seulement de l'image.

6. Dispositif selon l'une des revendications précédentes, **caractérisé par le fait que** certaines zones au moins de l'image à composer comporte plus de deux plans (FRG, VID, BGK), et **par le fait que** l'unité d'accélération (BLT) est apte à composer ces zones
en plusieurs compositions élémentaires successives, chaque composition élémentaire mettant en oeuvre deux plans intermédiaires, un plan intermédiaire étant un plan de l'image ou un plan résultant d'au moins une composition élémentaire précédente.

7. Dispositif selon l'une des revendications précédentes, **caractérisé par le fait que** l'unité d'accélération (BLT) comporte trois entrées (S1-S3), trois voies internes de traitement (VT1-VT3) respectivement connectées sur les trois entrées, une unité commandable de composition (ALUB) connectées à la sortie desdites trois voies internes de traitement, une quatrième voie interne de traitement (VT4) connectée à la sortie de l'unité de composition, et une sortie (DES) connectée à la sortie de cette quatrième voie.

8. Dispositif selon la revendication 7, **caractérisé par le fait qu'**une première et une deuxième voies internes de traitement (VT2-VT3) parmi lesdites trois voies internes de traitement sont équipées de moyens de filtrage horizontal et vertical (VF2, VF3, HF2, HF3), de façon à pouvoir transformer la taille d'une image, tandis que la troisième voie interne (VT1) est exempte de moyens de filtrage horizontal et vertical, et **par le fait que** des données vidéo relatives à un plan vidéo de l'image et comportant des données de luminance (Y) et des données de chrominance (CbCr) moins nombreuses que les données de luminance sont exclusivement traitées par lesdites première et deuxième voies internes de traitement (VT2, VT3).

9. Dispositif selon la revendication 8, **caractérisé par le fait que** l'une desdites première et deuxième voies internes (VT2, VT3) est exclusivement dédiée au traitement de données de luminance (Y).

10. Dispositif selon l'une des revendications 7 à 9, **caractérisé par le fait que** les moyens de filtrage (VF2, VF3, HF2, HF3) de chacune des première et deuxième voies internes sont commandables indépendamment.

11. Dispositif selon l'une des revendications précédentes, **caractérisé par le fait que** ledit composant comporte une mémoire vive interne (MMA) apte à coopérer avec l'unité d'accélération (BLT) de façon à stocker temporairement des données intermédiaires lors de la composition d'une image.

12. Dispositif selon la revendication 11, **caractérisé par le fait que** l'unité de traitement est apte, en présence d'une zone d'une image à composer comportant plus de deux plans, à subdiviser cette zone en sous-zones (Tij) dont la taille à la sortie de l'unité d'accélération bidimensionnelle est au plus égale à la taille-mémoire de ladite mémoire interne, et **par le fait que** l'unité d'accélération est apte à effectuer la composition de ladite zone en composant successivement les différentes sous-zones, la composition d'une sous-zone s'effectuant en plusieurs compositions élémentaires successives, chaque composition élémentaire mettant en oeuvre deux plans intermédiaires, un plan intermédiaire étant un plan de ladite sous-zone ou un plan résultant d'au moins une composition élémentaire précédente de ladite sous-zone, et **par le fait que** le résultat de la dernière composition élémentaire de la sous-zone est stocké dans ladite mémoire principale (MMP), alors que le résultat de chaque composition élémentaire précédente est temporairement stocké dans ladite mémoire interne (MMA).

13. Dispositif selon l'une des revendications précédentes, **caractérisé par le fait que** l'unité d'accélération graphique comporte des moyens de contrôle (CTL) aptes à déclencher la tâche de composition d'image à l'occurrence d'un signal de synchronisation verticale, puis à déclencher une tâche de génération d'objet graphique ou à autoriser la reprise d'une tâche de génération d'objet graphique interrompue lors de ladite occurrence du signal de synchronisation verticale.

14. Dispositif selon l'une des revendications précédentes, **caractérisé par le fait qu'**il est réalisé sous la forme d'un circuit intégré.

15. Décodeur vidéo, **caractérisé par le fait qu'**il incorpore un dispositif selon l'une des revendications 1 à 14.

16. Procédé de traitement de données vidéo et graphiques, dans lequel on génère au sein d'une unité d'accélération (BLT) des objets graphiques destinés à être insérés dans des plans graphiques conformément à une liste d'instructions d'application (AQL), on délivre à intervalles réguliers des signaux de synchronisation verticale, et au cours de certains au moins de ces intervalles, on compose en temps réel au sein de ladite unité d'accélération bidimensionnelle (BLT) des images à afficher comportant au moins un plan vidéo et au moins un plan graphique compte tenu d'instructions de composition (CQL), les données vidéo relatives à un plan vidéo de l'image comportant des données de luminance et des données de chrominance moins nombreuses que les données de luminance, la tâche de composition d'image étant prioritaire par rapport à celle de génération d'objet graphique au sein d'un intervalle, et on stocke les images dans une mémoire principale (MMP) puis on extrait de la mémoire principale les données d'images ainsi composées en vue d'un affichage des images correspondantes.

17. Procédé selon la revendication 16, **caractérisé par le fait que** ladite mémoire principale (MMP) est situé à l'extérieur d'un composant comportant ladite unité d'accélération.

18. Procédé selon la revendication 16 ou 17, **caractérisé par le fait que** pendant un premier intervalle (INT1), on effectue une analyse de scène de l'image à afficher et on génère une liste d'instructions de composition de ladite image, **par le fait que** pendant un deuxième intervalle (INT2), consécutif au premier, on compose l'image à afficher compte tenu desdites instructions de composition et on la stocke dans ladite mémoire principale, et **par le fait que** pendant un troisième intervalle (INT3), consécutif au deuxième, on extrait les données d'image de ladite image à afficher.

19. Procédé selon la revendication 18, **caractérisé par le fait qu'**on reçoit des données vidéo codées, on décode ces données vidéo et on les stocke dans la mémoire principale (MMP) pendant le premier intervalle (INT1).

20. Procédé selon la revendication 18 ou 19, **caractérisé par le fait qu'**on génère des instructions de composition pour certaines zones seulement de l'image.

21. Procédé selon l'une des revendications 16 à 20, **caractérisé par le fait que** certaines zones de l'image à composer comportent plus de deux plans (FRG, VID, BGK) et **par le fait qu'**on compose ces zones de l'image en plusieurs compositions élémentaires successives, chaque composition élémentaire mettant en oeuvre deux plans intermédiaires, un plan intermédiaire étant un plan de l'image ou un plan résultant d'au moins une composition élémentaire précédente.

22. Procédé selon l'une des revendications 16 à 21, **caractérisé par le fait que** l'unité d'accélération (BLT) comporte trois entrées, trois voies internes de traitement respectivement connectées sur les trois entrées, une unité commandable de composition connectée à la sortie desdites trois voies internes de traitement, une quatrième voie interne de traitement connectée à la sortie de l'unité de composition, et une sortie connectée à la sortie de cette quatrième voie, et **par le fait qu'**on équipe une première et une deuxième voies internes de traitement parmi lesdites trois voies internes de traitement, de moyens de filtrage horizontal et vertical, de façon à pouvoir transformer la taille d'une image, tandis que la troisième voie interne est exempte de moyens de filtrage horizontal et vertical, et **par le fait que** des données vidéo relatives à un plan vidéo de l'image et comportant des données de luminance et des données de chrominance moins nombreuses que les données de luminance sont exclusivement traitées par lesdites première et deuxième voies internes de traitement.

23. Procédé selon la revendication 22, **caractérisé par le fait que** l'une desdites première et deuxième voies internes (VT2, VT3) est exclusivement dédiée au traitement de données de luminance.

24. Procédé selon l'une des revendications 22 ou 23, **caractérisé par le fait qu'**on commande indépendamment les moyens de filtrage de chacune des première et deuxième voies internes (VT2, VT3).

25. Procédé selon l'une des revendications 16 à 24, **caractérisé par le fait qu'**on stocke temporairement des données intermédiaires lors de la composition d'une image, dans une mémoire (MMA) interne au composant comportant ladite unité d'accélération (BLT).

26. Procédé selon la revendication 25, **caractérisé par le fait qu'**en présence d'une zone d'une image à composer comportant plus de deux plans, on subdivise cette zone en sous-zones (Tij), **par le fait qu'**on effectue la composition de ladite zone en composant successivement les différentes sous-zones, la composition d'une sous-zone s'effectuant en plusieurs compositions élémentaires successives, chaque composition élémentaire mettant en oeuvre deux plans intermédiaires, un plan intermédiaire étant un plan de ladite sous-zone ou un plan résultant d'au moins une composition élémentaire précédente de ladite sous-zone, et **par le fait que** le résultat de la dernière composition élémentaire de la sous-zone est stocké dans ladite mémoire principale, alors que le résultat de chaque composition élémentaire précédente est temporairement stocké dans ladite mémoire interne, et **par le fait que** la taille d'une sous-zone est telle qu'une fois deux sous-zones composées, la taille résultante est au plus égale à la taille-mémoire de ladite mémoire interne.

27. Procédé selon l'une des revendications 16 à 26, **caractérisé par le fait qu'**on déclenche la tâche de composition d'image à l'occurrence d'un signal de synchronisation verticale, puis à l'issue de cette tâche de composition on déclenche une tâche de génération d'objet graphique ou on autorise la reprise d'une tâche de génération d'objet graphique interrompue lors de ladite occurrence du signal de synchronisation verticale.

## Claims

1. Device for processing video and graphics data, comprising a component (CMP) and a main random access memory (MMP) which is able to contain video and graphics data, the component comprising a video synchronization generator (VTG) able to deliver vertical synchronization signals (Vsync) at regular intervals, a processing unit (CPU), a two-dimensional acceleration unit (BLT) able to generate graphics objects intended to be inserted into graphics planes in accordance with a list of application instructions (AQL), to cooperate with the processing unit and the main memory so as to compose in real time in the course of certain at least of these intervals images to be displayed comprising at least one video plane and/or at least one graphics plane having regard to composition instructions (CQL), the video data relating to a video plane of the image comprising luminance data and chrominance data that are less numerous than the luminance data, and to store the images in the main memory, the image composition task having priority over the graphics object generation task within an interval, and an output interface (IFS) for extracting the image data thus composed from the memory with a view to their delivery to an image display means (AFF).

2. Device according to Claim 1, **characterized in that** the said main random access memory (MMP) is a memory external to the component.

3. Device according to Claim 1 or 2, **characterized in that** during a first interval (INT1), the processing unit is able to perform a scene analysis of the image to be displayed and to generate a list of composition instructions for the said image, **in that** during a second interval (INT2), following the first, the acceleration unit composes the image to be displayed having regard to the said composition instructions and stores it in the said main memory, and **in that** during a third interval (INT3), following the second, the output interface extracts the image data of the said image to be displayed.

4. Device according to Claim 3, **characterized in that** the component (CMP) comprises an interface (IFE) for receiving coded video data, and a video decoding unit (DCD) co-operating with the processing unit (CPU) and the said main memory (MMP), and **in that** the video decoding unit performs the decoding of the video data (DCD) and stores them in the main memory during the first interval (INT1).

5. Device according to Claim 3 or 4, **characterized in that** the processing unit (CPU) is able to generate composition instructions for certain areas only of the image.

6. Device according to one of the preceding claims, **characterized in that** certain areas at least of the image to be composed comprise more than two planes (FRG, VID, BGK), and **in that** the acceleration unit (BLT) is able to compose these areas into several successive elementary compositions, each elementary composition implementing two intermediate planes, an intermediate plane being a plane of the image or a plane resulting from at least one previous elementary composition.

7. Device according to one of the preceding claims, **characterized in that** the acceleration unit (BLT) comprises three inputs (S1 - S3), three internal processing paths (VT1 - VT3) respectively connected to the three inputs, a controllable composition unit (ALUB) connected to the output of the said three internal processing paths, a fourth internal processing path (VT4) connected to the output of the composition unit, and an output (DES) connected to the output of this fourth path.

8. Device according to Claim 7, **characterized in that** a first and a second internal processing paths (VT2 - VT3) from among the said three internal processing paths are equipped with means of horizontal and vertical filtering (VF2, VF3, HF2, HF3), in such a way as to be able to transform the size of an image, while the third internal path (VT1) is devoid of means of horizontal and vertical filtering, and **in that** video data relating to a video plane of the image and comprising luminance data (Y) and chrominance data (CbCr) that are less numerous than the luminance data are processed exclusively by the said first and second internal processing paths (VT2, VT3).

9. Device according to Claim 8, **characterized in that** one of the said first and second internal paths (VT2, VT3) is dedicated exclusively to the processing of luminance data (Y).

10. Device according to one of Claims 7 to 9,
**characterized in that** the filtering means (VF2, VF3, HF2, HF3) of each of the first and second internal paths are independently controllable.

11. Device according to one of the preceding claims, **characterized in that** the said component comprises an internal random access memory (MMA) able to co-operate with the acceleration unit (BLT) in such a way as to temporarily store intermediate data during the composition of an image.

12. Device according to Claim 11, **characterized in that** the processing unit is able, in the presence of an area of an image to be composed comprising more than two planes, to subdivide this area into subareas (Tij) whose size at the output of the two-dimensional acceleration unit is at most equal to the memory size of the said internal memory, and **in that** the acceleration unit is able to perform the composition of the said area by successfully composing the various subareas, the composition of a subarea being performed as several successive elementary compositions, each elementary composition implementing two intermediate planes, an intermediate plane being a plane of the said subarea or a plane resulting from at least one previous elementary composition of the said subarea, and **in that** the result of the last elementary composition of the subarea is stored in the said main memory (MMP), while the result of each previous elementary composition is stored temporarily in the said internal memory (MMA).

13. Device according to one of the preceding claims, **characterized in that** the graphics acceleration unit comprises control means (CTL) able to trigger the image composition task on the occurrence of a vertical synchronization signal, then to trigger a graphics object generation task or to authorize the resumption of a graphics object generation task interrupted during the said occurrence of the vertical synchronization signal.

14. Device according to one of the preceding claims, **characterized in that** it is embodied in the form of an integrated circuit.

15. Video decoder, **characterized in that** it incorporates a device according to one of Claims 1 to 14.

16. Method of processing video and graphics data, in which graphics objects intended to be inserted into graphics planes are generated within an acceleration unit (BLT), in accordance with a list of application instructions (AQL), vertical synchronization signals are delivered at regular intervals, and in the course of certain at least of these intervals images to be displayed comprising at least one video plane and at least one graphics plane are composed in real time within the said two-dimensional acceleration unit (BLT) having regard to composition instructions (CQL), the video data relating to a video plane of the image comprising luminance data and chrominance data that are less numerous than the luminance data, the image composition task having priority over the graphics object generation task within an interval, and the images are stored in a main memory (MMP), then the image data thus composed are extracted from the main memory with a view to a displaying of the corresponding images.

17. Method according to Claim 16, **characterized in that** the said main memory (MMP) is situated outside a component comprising the said acceleration unit.

18. Method according to Claim 16 or 17, **characterized in that** during a first interval (INT1), a scene analysis of the image to be displayed is performed and a list of composition instructions of the said image is generated, **in that** during a second interval (INT2), following the first, the image to displayed is composed having regard to the said composition instructions and it is stored in the said main memory, and **in that** during a third interval (INT3), following the second, the image data of the said image to be displayed are extracted.

19. Method according to Claim 18, **characterized in that** coded video data are received, these video data are decoded and are stored in the main memory (MMP) during the first interval (INT1).

20. Method according to Claim 18 or 19, **characterized in that** composition instructions are generated for certain areas only of the image.

21. Method according to one of Claims 16 to 20,
**characterized in that** certain areas of the image to be composed comprise more than two planes (FRG, VID, BGK) and **in that** these areas of the image are composed as several successive elementary compositions, each elementary composition implementing two intermediate planes, an intermediate plane being a plane of the image or a plane resulting from at least one previous elementary composition.

22. Method according to one of Claims 16 to 21,
**characterized in that** the acceleration unit (BLT) comprises three inputs, three internal processing paths respectively connected to the three inputs, a controllable composition unit connected to the output of the said three internal processing paths, a fourth internal processing path connected to the output of the composition unit, and an output connected to the output of this fourth path, and **in that** a first and a second internal processing paths from among the said three internal processing paths are equipped with means of horizontal and vertical filtering, in such a way as to be able to transform the size of an image, while the third internal path is devoid of means of horizontal and vertical filtering, and **in that** video data relating to a video plane of the image and comprising luminance data and chrominance data that are less numerous than the luminance data are processed exclusively by the said first and second internal processing paths.

23. Method according to Claim 22, **characterized in that** one of the said first and second internal paths (VT2, VT3) is dedicated exclusively to the processing of luminance data (Y).

24. Method according to one of Claims 22 or 23,
**characterized in that** the means of filtering of each of the first and second internal paths (VT2, VT3) are controlled independently.

25. Method according to one of Claims 16 to 24,
**characterized in that** intermediate data are stored temporarily during the composition of an image, in a memory (MMA) internal to the component comprising said acceleration unit (BLT).

26. Method according to Claim 25, **characterized in that** in the presence of an area of an image to be composed comprising more than two planes, this area is subdivided into subareas (Tij), **in that** the composition of the said area is performed by successively composing the various subareas, the composition of a subarea being performed as several successive elementary compositions, each elementary composition implementing two intermediate planes, an intermediate plane being a plane of the said subarea or a plane resulting from at least one previous elementary composition of the said subarea, and **in that** the result of the last elementary composition of the subarea is stored in the said main memory, while the result of each previous elementary composition is stored temporarily in the said internal memory, and **in that** the size of a subarea is such that once two subareas have been composed, the resulting size is at most equal to the memory size of the said internal memory.

27. Method according to one of Claims 16 to 26,
**characterized in that** the image composition task is triggered on the occurrence of a vertical synchronization signal, then on completion of this composition task a graphics object generation task is triggered or the resumption of a graphics object generation task interrupted during the said occurrence of the vertical synchronization signal is authorized.

## Patentansprüche

1. Vorrichtung zur Verarbeitung von Video- und Graphikdaten, die eine Komponente (CMP) und einen SchreibLese-Hauptspeicher (MMP), der Video- und Graphikdaten halten kann, wobei die Komponente versehen ist mit einem Videosynchronisationsgenerator (VTG), der dazu ausgelegt ist, in regelmäßigen Intervallen Vertikalsynchronisationssignale (Vsync) auszugeben, einer Zentraleinheit (CPU), einer zweidimensionalen Beschleunigungseinheit (BLT), die dazu ausgelegt ist, Graphikobjekte zu erzeugen, die in Graphikebenen in Übereinstimmung mit einer Anwendungsbefehlsliste (AQL) eingefügt werden sollen, mit der Zentraleinheit und mit dem Hauptspeicher zusammenzuarbeiten, um in Echtzeit wenigstens während Bestimmter dieser Intervalle anzuzeigende Bilder, die wenigstens eine Videoebene und wenigstens eine Graphikebene enthalten, unter Berücksichtigung von Zusammensetzungsbefehlen (CQL) zusammenzusetzen, wobei die Videodaten, die auf eine Videoebene des Bildes bezogen sind, Luminanzdaten sowie Chrominanzdaten in einer Anzahl, die kleiner als jene der Luminanzdaten ist, enthalten, und die Bilder im Hauptspeicher zu speichern, wobei die Aufgabe der Bildzusammensetzung gegenüber jener der Graphikobjekterzeugung innerhalb eines Intervalls Priorität hat, und eine Ausgangsschnittstelle (IFS) enthält, um aus dem Speicher Bilddaten, die auf diese Weise zusammengesetzt worden sind, zu extrahieren, um sie an ein Bildanzeigemittel (AFF) auszugeben.

2. Vorrichtung nach Anspruch 1, **dadurch gekennzeichnet, dass** der Schreib/Lese-Hauptspeicher (MMP) ein bezüglich der Komponente externer Speicher ist.

3. Vorrichtung nach Anspruch 1 oder 2, **dadurch gekennzeichnet, dass** während eines ersten Intervalls (INT1) die Zentraleinheit dazu ausgelegt ist, eine Analyse der Szene des anzuzeigenden Bildes auszuführen und eine Befehlsliste für die Zusammensetzung dieses Bildes zu erzeugen, dass während eines dem ersten Intervall folgenden zweiten Intervalls (INT2) die Beschleunigungseinheit das anzuzeigende Bild unter Berücksichtigung der Zusammensetzungsbefehle zusammensetzt und es in dem Hauptspeicher speichert und dass während eines dem zweiten Intervall folgenden dritten Intervalls (INT3) die Ausgangsschnittstelle die Bilddaten des anzuzeigenden Bildes extrahiert.

4. Vorrichtung nach Anspruch 3, **dadurch gekennzeichnet, dass** die Komponente (CMP) eine Schnittstelle (I-FE), um codierte Videodaten zu empfangen, und eine Videodecodierungseinheit (DCD), die mit der Zentraleinheit (CPU) und mit dem Hauptspeicher (MMP) zusammenarbeitet, enthält und dass die Videodecodierungseinheit während des ersten Intervalls (INT1) die Decodierung der Videodaten (DCD) ausführt und sie im Hauptspeicher speichert.

5. Vorrichtung nach Anspruch 3 oder 4, **dadurch gekennzeichnet, dass** die Zentraleinheit (CPU) dazu ausgelegt ist, Zusammensetzungsbefehle lediglich für bestimmte Zonen des Bildes zu erzeugen.

6. Vorrichtung nach einem der vorhergehenden Ansprüche, **dadurch gekennzeichnet, dass** wenigstens bestimmte Zonen des zusammenzusetzenden Bildes mehr als zwei Ebenen (FRG, VID, BGK) enthalten und dass die Beschleunigungseinheit (BLT) dazu ausgelegt ist, diese Zonen zu mehreren aufeinander folgenden elementaren Zusammensetzungen zusammenzusetzen, wobei jede elementare Zusammensetzung zwei Zwischenebenen verwendet, wobei eine Zwischenebene eine Ebene des Bildes oder eine Ebene ist, die sich aus wenigstens einer vorhergehenden elementaren Zusammensetzung ergibt.

7. Vorrichtung nach einem der vorhergehenden Ansprüche, **dadurch gekennzeichnet, dass** die Beschleunigungseinheit (BLT) drei Eingänge (S1-S3), drei interne Verarbeitungswege (VT1-VT3), die mit den drei Eingängen entsprechend verbunden sind, eine steuerbare Zusammensetzungseinheit (ALUB), die mit den Ausgängen der drei internen Verarbeitungswege verbunden ist, einen vierten internen Verarbeitungsweg (VT4), der mit dem Ausgang der Zusammensetzungseinheit verbunden ist, und einen Ausgang (DES), der mit dem Ausgang dieses vierten Wegs verbunden ist, enthält.

8. Vorrichtung nach Anspruch 7, **dadurch gekennzeichnet, dass** ein erster und ein zweiter interner Verarbeitungsweg (VT2-VT3) unter den drei internen Verarbeitungswegen mit horizontalen und vertikalen Filterungsmitteln (VF2, VF3, HF2, HF3) ausgerüstet sind, derart, dass die Größe eines Bildes transformiert werden kann, während der dritte interne Weg (VT1) keine horizontalen und vertikalen Filterungsmittel enthält, und dass die Videodaten bezüglich einer Videoebene des Bildes, die Luminanzdaten (Y) sowie Chrominanzdaten (CbCr) in einer Anzahl, die kleiner als jene der Luminanzdaten ist, enthält, ausschließlich durch den ersten und den zweiten internen Verarbeitungsweg (VT2, VT3) verarbeitet werden.

9. Vorrichtung nach Anspruch 8, **dadurch gekennzeichnet, dass** entweder der erste oder der zweite interne Weg (VT2, VT3) ausschließlich der Verarbeitung von Luminanzdaten (Y) gewidmet ist.

10. Vorrichtung nach einem der Ansprüche 7 bis 9, **dadurch gekennzeichnet, dass** die Filterungsmittel (VF2, VF3, HF2, HF3) sowohl des ersten als auch des zweiten internen Wegs unabhängig voneinander steuerbar sind.

11. Vorrichtung nach einem der vorhergehenden Ansprüche, **dadurch gekennzeichnet, dass** die Komponente einen internen Schreib/Lese-Speicher (MMA) enthält, der dazu ausgelegt ist, mit der Beschleunigungseinheit (BLT) zusammenzuwirken, derart, dass Zwischendaten bei der Zusammensetzung eines Bildes temporär gespeichert werden.

12. Vorrichtung nach Anspruch 11, **dadurch gekennzeichnet, dass** die Zentraleinheit bei Vorhandensein einer Zone eines zusammenzusetzenden Bildes, die mehr als zwei Ebenen enthält, dazu ausgelegt ist, diese Zonen in Unterzonen (Tij) zu unterteilen, deren Größe am Ausgang der zweidimensionalen Beschleunigungseinheit höchstens gleich der Speichergröße des internen Speichers ist, und dass die Beschleunigungseinheit dazu ausgelegt ist, die Zusammensetzung der Zone durch aufeinander folgendes Zusammensetzen der verschiedenen Unterzonen auszuführen, wobei die Zusammensetzung einer Unterzone in mehreren aufeinander folgenden elementaren Zusammensetzungen erfolgt, wobei jede elementare Zusammensetzung zwei Zwischenebenen verwendet, wobei eine Zwischenebene eine Ebene der Unterzone oder eine Ebene ist, die sich aus wenigstens einer vorhergehenden elementaren Zusammensetzung der Unterzone ergibt, und dass das Ergebnis der letzten elementaren Zusammensetzung der Unterzone in dem Hauptspeicher (MMP) gespeichert wird, während das Ergebnis jeder vorhergehenden elementaren Zusammensetzung in dem internen Speicher (MMA) temporär gespeichert wird.

13. Vorrichtung nach einem der vorhergehenden Ansprüche, **dadurch gekennzeichnet, dass** die Graphikbeschleunigungseinheit Steuermittel (CTL) enthält, die dazu ausgelegt sind, die Aufgabe der Bildzusammensetzung bei Auftreten eines Vertikalsynchronisationssignals zu starten und dann eine Aufgabe der Erzeugung eines Graphikobjekts zu starten oder die Wiederaufnahme einer unterbrochenen Aufgabe der Erzeugung eines Graphikobjekts zuzulassen, wenn das Vertikalsynchronisationssignal auftritt.

14. Vorrichtung nach einem der vorhergehenden Ansprüche, **dadurch gekennzeichnet, dass** sie in Form einer integrierten Schaltung verwirklicht ist.

15. Videodecodierer, **dadurch gekennzeichnet, dass** er eine Vorrichtung nach einem der Ansprüche 1 bis 14 enthält.

16. Verfahren zur Verarbeitung von Video- und Graphikdaten, wobei in einer Beschleunigungseinheit (BLT) Graphikobjekte erzeugt werden, die dazu bestimmt sind, in Übereinstimmung mit einer Anwendungsbefehlsliste (AQL) in Graphikebenen eingefügt zu werden, in regelmäßigen Intervallen Vertikalsynchronisationssignale ausgegeben werden und wenigstens während Bestimmter dieser Intervalle in Echtzeit in der zweidimensionalen Beschleunigungseinheit (BLT) anzuzeigende Bilder, die wenigstens eine Videoebene und wenigstens eine Graphikebene enthalten, unter Berücksichtigung von Zusammensetzungsbefehlen (CQL) zusammengesetzt werden, wobei die auf eine Videoebene des Bildes bezogenen Videodaten, die Luminanzdaten sowie Chrominanzdaten in einer Anzahl, die kleiner als jene der Luminanzdaten ist, enthalten, wobei die Aufgabe der Bildzusammensetzung in Bezug auf jene der Graphikobjekterzeugung innerhalb eines Intervalls Priorität hat, und wobei die Bilder in einem Hauptspeicher (MMP) gespeichert werden und dann aus dem Hauptspeicher die somit zusammengesetzten Bilddaten für eine Anzeige der entsprechenden Bilder extrahiert werden.

17. Verfahren nach Anspruch 16, **dadurch gekennzeichnet, dass** sich der Hauptspeicher (MMP) außerhalb einer Komponente befindet, die die Beschleunigungseinheit enthält.

18. Verfahren nach Anspruch 16 oder 17, **dadurch gekennzeichnet, dass** während eines ersten Intervalls (INT1) eine Szenenanalyse des anzuzeigenden Bildes ausgeführt wird und eine Befehlsliste für die Zusammensetzung des Bildes erzeugt wird, dass während eines dem ersten Intervall folgenden zweiten Intervalls (INT2) das anzuzeigende Bild unter Berücksichtigung der Zusammensetzungsbefehle zusammengesetzt wird und in dem Hauptspeicher gespeichert wird und dass während eines dem zweiten Intervall folgenden dritten Intervalls (INT3) die Bilddaten des anzuzeigenden Bildes extrahiert werden.

19. Verfahren nach Anspruch 18, **dadurch gekennzeichnet, dass** während des ersten Intervalls (INT1) codierte Videodaten empfangen werden, diese Videodaten decodiert werden und im Hauptspeicher (MMP) gespeichert werden.

20. Verfahren nach Anspruch 18 oder 19, **dadurch gekennzeichnet, dass** Zusammensetzungsbefehle nur für bestimmte Zonen des Bildes erzeugt werden.

21. Verfahren nach einem der Ansprüche 16 bis 20, **dadurch gekennzeichnet, dass** bestimmte Zonen des zusammenzusetzenden Bildes mehr als zwei Ebenen (FRG, VID, BGK) enthalten und dass diese Zonen des Bildes zu mehreren aufeinander folgenden elementaren Zusammensetzungen zusammengesetzt werden, wobei jede elementare Zusammensetzung zwei Zwischenebenen verwendet, wobei eine Zwischenebene eine Ebene des Bildes oder eine Ebene ist, die sich aus wenigstens einer vorhergehenden elementaren Zusammensetzung ergibt.

22. Verfahren nach einem der Ansprüche 16 bis 21, **dadurch gekennzeichnet, dass** die Beschleunigungseinheit (BLT) drei Eingänge, drei interne Verarbeitungswege, die mit den drei Eingängen entsprechend verbunden sind, eine steuerbare Zusammensetzungseinheit, die mit dem Ausgang der drei internen Verarbeitungswege verbunden ist, einen vierten internen Verarbeitungsweg, der mit dem Ausgang der Zusammensetzungseinheit verbunden ist, und einen Ausgang, der mit dem Ausgang dieses vierten Wegs verbunden ist, enthält und dass ein erster und ein zweiter interner Verarbeitungsweg unter den drei internen Verarbeitungswegen mit horizontalen und vertikalen Filterungsmitteln ausgerüstet wird, derart, dass die Größe eines Bildes transformiert werden kann, während der dritte interne Weg keine horizontalen und vertikalen Filterungsmittel enthält, und dass Videodaten bezüglich einer Videoebene des Bildes, die Luminanzdaten sowie Chrominanzdaten in einer Anzahl, die kleiner als jene der Luminanzdaten ist, enthalten, ausschließlich durch den ersten und den zweiten internen Verarbeitungsweg verarbeitet werden.

23. Verfahren nach Anspruch 22, **dadurch gekennzeichnet, dass** entweder der erste oder der zweite interne Weg (VT2, VT3) ausschließlich der Verarbeitung von Luminanzdaten gewidmet ist.

24. Verfahren nach einem der Ansprüche 22 oder 23, **dadurch gekennzeichnet, dass** die Filterungsmittel sowohl des ersten als auch des zweiten internen Wegs (VT2, VT3) unabhängig voneinander gesteuert werden.

25. Verfahren nach einem der Ansprüche 16 bis 24, **dadurch gekennzeichnet, dass** Zwischendaten bei der Zusammensetzung eines Bildes in einem bezüglich der die Beschleunigungseinheit (BLT) enthaltenden Komponente internen Speicher (MMA) temporär gespeichert werden.

26. Verfahren nach Anspruch 25, **dadurch gekennzeichnet, dass** bei Vorhandensein einer Zone eines zusammenzusetzenden Bildes, die mehr als zwei Ebenen enthält, diese Zonen in Unterzonen (Tij) unterteilt wird, dass die Zusammensetzung dieser Zone durch aufeinander folgendes Zusammensetzen der verschiedenen Unterzonen ausgeführt wird, wobei die Zusammensetzung einer Unterzone in mehreren aufeinander folgenden elementaren Zusammensetzungen erfolgt, wobei jede elementare Zusammensetzung zwei Zwischenebenen verwendet, wobei eine Zwischenebene eine Ebene der Unterzone oder eine Ebene ist, die sich aus wenigstens einer vorhergehenden elementaren Zusammensetzung der Unterzone ergibt, dass das Ergebnis der letzten elementaren Zusammensetzung der Unterzone im Hauptspeicher gespeichert wird, während das Ergebnis jeder vorhergehenden elementaren Zusammensetzung in dem internen Speicher temporär gespeichert wird, und dass die Größe einer Unterzone derart ist, dass, sobald zwei Unterzonen zusammengesetzt sind, die resultierende Größe höchstens gleich der Speichergröße des internen Speichers ist.

27. Verfahren nach einem der Ansprüche 16 bis 26, **dadurch gekennzeichnet, dass** die Aufgabe der Bildzusammensetzung bei Auftreten eines Vertikalsynchronisationssignals gestartet wird und dann am Ende dieser Zusammensetzungsaufgabe eine Aufgabe zur Erzeugung eines Graphikobjekts gestartet wird oder die Wiederaufnahme einer unterbrochenen Aufgabe zur Erzeugung eines Graphikobjekts zugelassen wird, wenn das Vertikalsynchronisationssignal auftritt.
